# FASCICULE DE BREVET EUROPEEN

(11) **EP 0 515 652 B1**
(45) Date de publication et mention de la délivrance du brevet: **17.04.1996**
(21) Numéro de dépôt: 92902124.4
(22) Date de dépôt: 11.12.1991
(51) Int. Cl.: E21B 45/00, G01P 3/64

(54) **METHODE ET DISPOSITIF POUR MESURER LA VITESSE D'AVANCEMENT D'UN EQUIPEMENT PROGRESSANT DANS UN PUITS**
VERFAHREN UND VORRICHTUNG ZUM MESSEN DER VORSCHUBGESCHWINDIGKEIT EINES GERÄTES IM BOHRLOCH
METHOD AND DEVICE FOR MEASURING THE RATE OF PENETRATION OF EQUIPMENT IN A WELL

(30) Priorité: 12.12.1990 FR 9015657
(43) Date de publication de la demande: 02.12.1992
(73) Titulaire: INSTITUT FRANCAIS DU PETROLE, F-92502 Rueil-Malmaison (FR); CENTRE NATIONAL DE LA RECHERCHE SCIENTIFIQUE, F-75007 Paris (FR)
(72) Inventeur: FAY, Hubert, F-78260 L'Etang-la-Ville (FR); CLOT, Jean, F-31650 S.-Orens-de-Gameville (FR)
(86) Numéro de dépôt international: FR9101001
(87) Numéro de publication internationale: WO9210641

(56) Documents cités:
- EP-A- 0 197 696
- GB-A- 2 005 865
- US-A- 4 662 209

## Description

La présente invention concerne une méthode et un dispositif pour mesurer la vitesse d'avancement réelle d'un équipement progressant dans un puits. L'invention peut être appliquée dans le domaine du pétrole pour la détermination de la vitesse d'avancement réelle d'un équipement de puits quelconque qu'il s'agisse d'un outil de forage ou d'une sonde de mesure par exemple. La connaissance de la vitesse réelle d'avancement est d'un grand intérêt pour les foreurs mais aussi pour les géologues qui ont besoin de connaître avec précision la configuration du sous-sol traversé par un puits.

Des exemples de l'art antérieur dans le domaine de la détermination de la mesure de la vitesse de déplacement d'un outil dans un puits, sont décrits dans les brevets U.S 2 688 871, 3 746 102 ou 4 567 759, la demande de brevet européen EP 289 068 ou les brevets français FR 2 038 700 ou 2 593 606 etc.

La vitesse d'avancement d'un outil dans un puits est souvent obtenue indirectement par des mesures faites en surface. Dans le cas d'un outil de forage, une méthode courante consiste à mesurer en surface la vitesse de pénétration dans le sol de la colonne qui supporte l'outil de forage ainsi qu'un autre paramètre tel que la tension dans la colonne ou encore au fond du puits, le poids appliqué à l'outil de forage.

Les résultats obtenus par ce type de méthodes ne sont généralement pas très rigoureux. La colonne est en effet constituée d'un train de tiges ou de tubes plus ou moins flexibles. Elle est de ce fait relativement élastique et sa tension varie en fonction de sa longueur. Des corrections doivent être introduites en conséquence pour tenir compte de ses variations de longueur qui sont d'autant plus grandes que le puits est profond. On doit tenir compte aussi des frictions plus ou moins importantes entre la colonne et les parois ainsi que de l'influence des différentes pressions s'exerçant sur l'ensemble de l'équipement progressant dans le puits. La détermination de la vitesse d'avancement devient donc très complexe si l'on veut prendre en compte tous les facteurs susceptibles de fausser les valeurs des paramètres intervenant dans le calcul, dans la mesure où l'on peut les connaître avec précision.

Une autre méthode utilisée dans le cadre d'opérations de forage, consiste à inclure dans l'équipement de fond plusieurs accéléromètres pour mesurer les composantes des accélérations qu'il subit et à intégrer ces mesures pour obtenir la vitesse suivant la direction du puits. Cette méthode permet bien d'obtenir une mesure directe de la vitesse d'avancement. Cependant, sa mise en oeuvre est rendue difficile du fait des vibrations très importantes de l'outil'au fond du puits et aussi de la dérive propre des signaux fournis par les accéléromètres sans compensation viendrait fausser les résultats.

La méthode selon l'invention a pour objet de fournir des mesures de la vitesse réelle de déplacement d'un équipement le long d'un puits en évitant les inconvénients ci-dessus mentionnés.

Elle est caractérisée en ce qu'elle comporte :
- l'émission de signaux par des moyens d'émission associés audit équipement;
- la réception des signaux renvoyés par la paroi du puits par au moins deux unités de réception associées audit équipement et se trouvant en opération à des emplacements différents le long du puits et à une distance bien déterminée l'une de l'autre;
- la mémorisation des signaux reçus respectivement par les deux unités de réception;
- la reconnaissance de mêmes portions de paroi du puits ayant renvoyé des signaux successivement vers les deux unités de réception par une comparaison des signaux mémorisés reçus respectivement par les deux unités de réception; et
- la mesure de l'intervalle de temps séparant les instants de passage des deux unités de réception devant chaque portion de paroi reconnue par ladite comparaison, la vitesse de déplacement dudit équipement étant fonction dudit intervalle de temps mesuré, et
- la détermination explicite de la vitesse de déplacement en fonction de l'intervalle de temps mesuré.

La méthode comporte par exemple la mémorisation d'au moins deux ensembles de signaux reçus respectivement par lesdites unités de réception, représentant chacun une image d'une portion au moins de la paroi périphérique du puits, la reconnaissance d'une même portion de surface ayant renvoyé des signaux successivement vers les deux unités de réception étant obtenue par une corrélation des deux images correspondantes.

Suivant un mode de réalisation, les signaux de chaque ensemble de signaux sont reçus simultanément suivant plusieurs directions radiales différentes.

Suivant un autre mode de réalisation, les signaux de chaque ensemble peuvent être reçus successivement par balayage suivant plusieurs directions radiales différentes.

Les signaux émis et reçus peuvent être des ondes acoustiques, des ondes électro-magnétiques ou des rayonnements corpusculaires.

Le dispositif selon l'invention est caractérisé en ce qu'il comporte :
- des moyens d'émission associés à l'équipement déplacé dans le puits, adaptés à émettre des signaux en direction de la paroi du puits;
- au moins deux unités de réception associées audit équipement pour recevoir les signaux renvoyés par la paroi du puits, ces deux unités étant disposées en opération à des profondeurs différentes du puits et à une distance bien déterminée l'une de l'autre;
- des moyens pour mémoriser les signaux respectivement reçus par les deux unités de réception;
- des moyens de traitement permettant, par une comparaison des signaux mémorisés, d'identifier des portions de paroi du puits ayant successivement renvoyé des signaux vers les deux unités de réception; et
- des moyens de calcul pour mesurer l'intervalle de temps entre les instants de passage des deux unités de réception devant chaque portion de paroi identifiée par ladite comparaison, et en déduire la vitesse de déplacement de l'équipement de puits.

Suivant un mode de réalisation, les moyens d'émission comportent une seule unité d'émission.

Suivant un autre mode de réalisation, les moyens d'émission comportent au moins deux unités d'émission associées respectivement auxdites unités de réception et dans ce cas, on peut utiliser des transducteurs adaptés à fonctionner à la fois à l'émission et à la réception.

Les moyens d'émission comportent par exemple une pluralité d'émetteurs répartis à la périphérie de l'équipement déplacé le Long du puits.

Chaque unité de réception peut comporter également une pluralité de récepteurs répartis à la périphérie de L'équipement.

Les moyens d'émission peuvent comporter au moins un transducteur tournant irradiant la paroi du puits par balayage.

Chacune desdites unités de réception peut comporter aussi au moins un transducteur recevant par balayage les signaux reçus par la paroi du puits.

D'autres caractéristiques et avantages de la méthode et du dispositif selon l'invention apparaîtront mieux à la lecture de la description ci-après de modes de réalisation décrits à titre d'exemples non limitatifs, en se référant aux dessins annexés où :
- la Fig. 1 montre schématiquement un équipement de puits relié à une installation de surface;
- la Fig. 2 montre schématiquement un mode de réalisation du dispositif selon l'invention associé à un équipement déplacé le long d'un puits;
- la fig. 3 montre un schéma synoptique de l'appareillage électronique de détermination de la vitesse dans le mode de réalisation de la Fig.1; et
- la Fig. 4 montre un schéma synoptique d'un ensemble de réception des signaux captés par chaque unité de réception, adapté au même mode de réalisation.

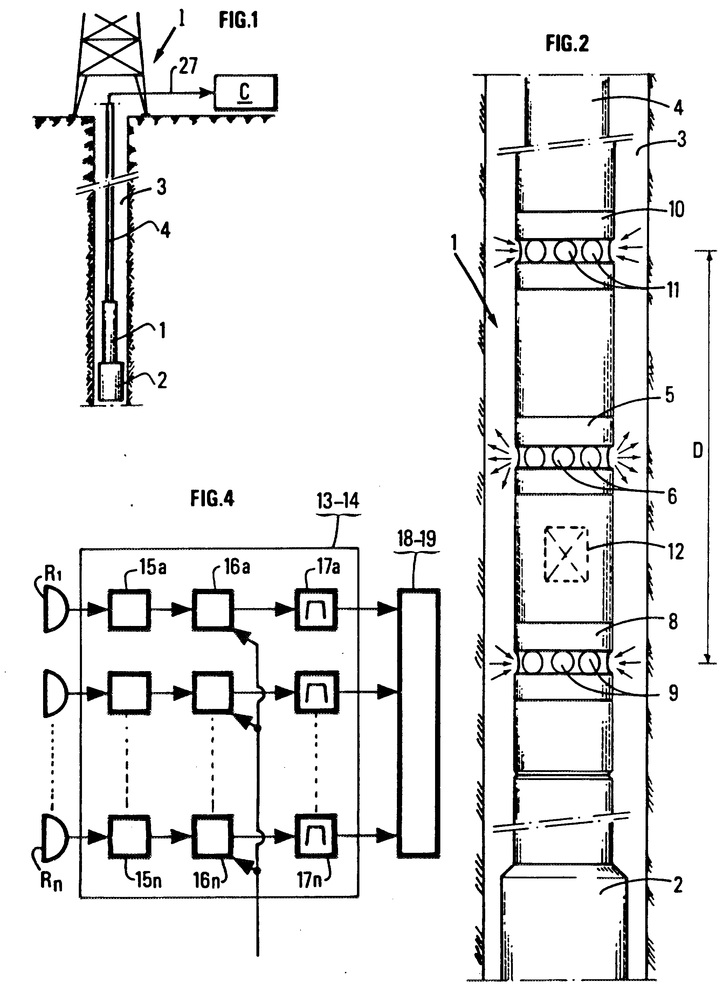

Un corps tubulaire 1 (Fig.1) est interposé entre un équipement 2 descendu dans un puits 3 et des moyens de liaison 4 adaptés à relier celui-ci à une installation de surface I comportant une porte de commande C. Dans le cas où l'équipement se rapporte au forage du puits, les moyens de liaison adaptés comportent un train de tiges ou bien un flexible. Dans le cas où l'équipement est une sonde de mesure, par exemple, les moyens de liaison adaptés comportent par exemple un câble électro-porteur.

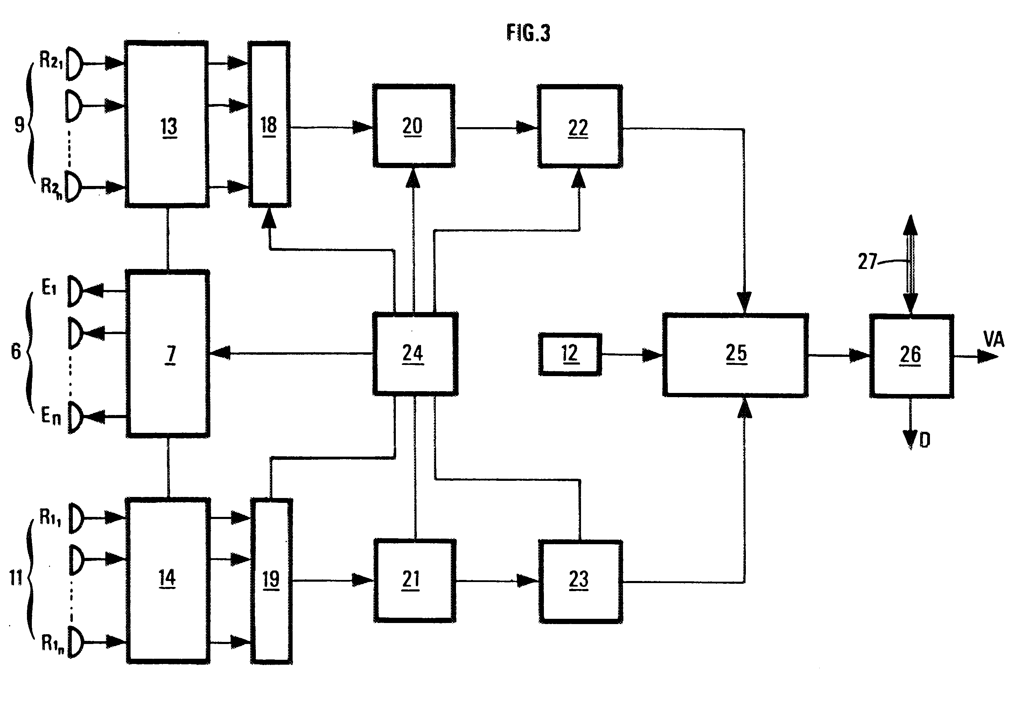

A L'intérieur du corps 1 sont disposés (Fig. 2) des moyens 5 d'émission de signaux. Dans le mode de réalisation décrit, ces moyens d'émission comportent par exemple une couronne 6 de transducteurs E1, E2... Ep du type à céramiques par exemple, disposés à la périphérie du corps 1 et adaptés à émettre des signaux acoustiques vers différentes portions de la paroi du puits sensiblement à la même profondeur. Les moyens d'émission 5 comportent un ensemble d'émission 7 (Fig. 3) adapté à délivrer aux transducteurs émetteurs E1 à Ep, des signaux à une fréquence relativement élevée de l'ordre de 1 MHz par exemple qui peut être modulée en fréquence ou en amplitude.

Dans le corps 1 est disposée une première unité de réception 8 comportant une couronne 9 de transducteurs récepteurs R11, R12... R1n également du type à céramiques par exemple adaptés à recevoir les signaux émis par les moyens d'émission 5 et renvoyés par portion de la paroi autour du puits.

Une deuxième unité de réception 10 analogue à la première unité 8 est disposée dans le corps à un emplacement décalé longitudinalement par rapport à celui occupé par la première unité 8, le décalage longitudinal entre les deux étant connu avec précision. Les deux unités sont disposées par exemple à quelques dizaines de cm l'une de l'autre ou plus éventuellement.

Cette deuxième unite de réception 10 comporte elle aussi une couronne 11 de transducteurs récepteurs R21, R21... R2n adaptés à recevoir Les signaux émis par les moyens d'émission et renvoyés par la paroi du puits.

Dans Le corps 1 est également disposé un capteur azimutal 12. Il est adapté à fournir un signal représentatif des variations angulaires du corps durant son déplacement dans le puits 3.

Les transducteurs R11 à R1n et R21 à R2n des deux couronnes 9, 10 respectivement, sont connectés à deux ensembles de réception 13, 14. Chacun de ces ensembles 13, 14 comporte (Fig. 4) un ensemble d'amplificateurs 15a, 15b... 15n connectés respectivement aux transducteurs récepteurs R1, R2... Rn, un ensemble de démodulateurs 16a, 16b, 16n connectés respectivement aux sorties des différents amplificateurs et un ensemble de filtres 17a, 17b... 17n auxquels on applique respectivement les signaux démodulés. Les signaux issus des différents filtres 17 d'un même ensemble de réception 13, 14 sont appliqués aux entrées d'un multiplexeur 18, 19. Les signaux issus de ces deux multiplexeurs sont appliqués respectivement à deux convertisseurs analogique-numérique 20, 21. Après leur numérisation, les signaux sont stockés dans deux unités de mémoire 22, 23. Un ensemble de contrôle 24 est adapté à synchroniser le fonctionnement de l'ensemble d'émission 7, des multiplexeurs 18, 19, des convertissseurs 20, 21 et des unités de mémoire 22, 23.

Le dispositif comporte encore un ensemble de comparaison 25 tel qu'un corrélateur connecté aux deux unités de mémoire 22, 23 et au capteur azimutal 12. Un élément de calcul 26 est connecté à l'ensemble de comparaison 25 pour calculer la vitesse de déplacement du corps.

Un moyen de transmission tel qu'une ligne 27 (Fig. 1, 3)) permet de transmettre à l'ensemble de commande C en surface les données mesurées au fond. On peut cependant utiliser une liaison d'un type différent, par ondes transmises dans la boue de forage par ondes électro-magnétiques au travers de la formation ou encore par le train de tiges, etc.

Le calcul de la vitesse de déplacement du corps 1 est effectué par le calcul de l'intervalle de temps séparant les passages successifs des deux unités de récepteurs devant une même portion de la paroi du puits. L'identification de ces portions de paroi communes est réalisée par le corrélateur 25 qui est adapté à comparer deux "images" ou "signatures" stockées respectivement dans les unités de mémoire 22, 23 et constituées chacune de signaux reçus par les transducteurs d'une des unités de réception 8, 10. Chaque image est représentative d'une portion de paroi à la périphérie du puits au niveau d'une des couronnes 9, 11 de transducteurs. Les images à comparer sont ajustées l'une par rapport à l'autre en tenant compte des variations éventuelles de l'azimut détectées par le capteur azimutal 12.

Si le corps se déplace vers le bas par exemple, le corrélateur est adapté à comparer toute nouvelle image de paroi récemment mémorisée par l'unité 23 aux images plus anciennes mémorisées dans l'autre unité de mémoire 22. Par balayage des différentes images successivement mémorisées contenues dans l'unité 22, le corrélateur identifie les images sensiblement identiques correspondant à une mëme portion de paroi. Un instant d'acquisition t1, t2 étant associé à chaque image, l'élément de calcul 26 détermine la vitesse de déplacement à partir de la distance connue D entre les deux ensembles de réception 8, 10 et de l'intervalle de temps séparant les deux instants t1 et t2.

Si le déplacement du corps s'effectue dans le puits en sens inverse, la comparaison a lieu bien évidemment entre les images fraîchement mémorisées dans l'unité 22 et celles plus anciennes dans l'autre unité de mémoire 23.

Pour un écart longitudinal donné D entre les deux unités de réception on choisit la capacité de chaque unité de mémoire 22, 23 en fonction de la période de répétition des cycles d'émission -réception de signaux et de la vitesse de déplacement de l'équipement pour pouvoir contenir toutes les images de la portion de puits intermédiaire.

Suivant un deuxième mode de réalisation convenant pour un équipement de puits qui tourne sur lui-même de façon suffisamment régulière au cours de son déplacement, le dispositif selon l'invention peut comporter aussi des moyens de réception à balayage capables d'acquérir séquentiellement des images acoustiques de la paroi qui défile devant un ou plusieurs transducteurs tournant avec l'équipement de puits. On peut utiliser aussi dans ce cas, des moyens d'émission tournant avec l'équipement de puits et adaptés à irradier la paroi par balayage également.

Suivant un troisième mode de réalisation, chaque unité de réception à couronne telle que décrite en relation avec la Fig. 2, peut comporter des transducteurs capables de fonctionner aussi bien à l'émission qu'à la réception. Dans ce cas, les deux unités d'émission-réception réalisent séparément les cycles successifs d'émission, de réception et d'acquisition de signaux.

On ne sortirait pas du cadre de l'invention en formant des images ou signatures de la paroi du puits par irradiation de celle-ci avec d'autres types d'ondes. Le dispositif peut être adapté par exemple pour l'émission et la réception d'un rayonnement électro-magnétique (X ou gamma) ou corpusculaire.

Dans les modes de réalisation décrits, on procède à une comparaison d'images de la périphérie du puits. On ne sortirait pas du cadre de l'invention, bien entendu, en se limitant à des comparaisons portant sur des portions plus limitées de la paroi du puits.

On ne sortirait pas plus du cadre de l'invention, dans le cas où l'on dispose d'une liaison de transmission de données à grand débit, en reportant dans la porte de commande C en surface (Fig. 1) certaines opérations de traitement des signaux captés au fond du puits par les unités de réception.

Dans le mode de réalisation décrit, les signaux reçus sont filtrés après démodulation. On ne sortirait pas non plus du cadre de l'invention en inversant l'ordre du traitement effectué sur les signaux reçus.

## Revendications

1. Méthode pour la mesure de la vitesse de déplacement d'un équipement (2) descendu dans un puits (3), caractérisée en ce qu'elle comporte :
- l'émission de signaux par des moyens d'émission (5) associés audit équipement (2);
- la réception des signaux renvoyés par la paroi du puits par au moins deux unités de réception (8, 10) associées audit équipement et se trouvant en opération à des emplacements différents le long du puits et à une distance bien déterminée D l'une de l'autre;
- la mémorisation des signaux reçus respectivement par les deux unités de réception;
- la reconnaissance de mêmes portions de paroi du puits ayant renvoyé des signaux successivement vers les deux unités de réception, par une comparaison des signaux mémorisés reçus respectivement par les deux unités de réception;
- la mesure de l'intervalle de temps séparant les instants de passage des deux unités de réception devant chaque portion de paroi reconnue par ladite comparaison; et
- la détermination la vitesse de déplacement en fonction dudit intervalle de temps.

2. Méthode selon la revendication 1, caractérisée en ce que l'on mémorise au moins deux ensembles de signaux reçus respectivement par lesdites unités de réception, représentant chacun une image d'une portion au moins de la surface périphérique du puits, la reconnaissance d'une même portion de surface ayant renvoyé des signaux successivement vers les deux unités de réception étant obtenue par une corrélation des deux images correspondantes.

3. Méthode selon la revendication 2, caractérisée en ce que les signaux de chaque ensemble de signaux sont reçus simultanément suivant plusieurs directions radiales différentes.

4. Méthode selon la revendication 2, caractérisée en ce que les signaux de chaque ensemble sont reçus successivement par balayage suivant plusieurs directions radiales différentes.

5. Méthode selon l'une des revendications précédentes, caractérisée en ce que les signaux émis et reçus sont des ondes acoustiques.

6. Méthode selon l'une des revendications 1 à 4, caractérisée en ce que les signaux émis et reçus sont des ondes électro-magnétiques.

7. Méthode selon l'une des revendications 1 à 4, caractérisée en ce que les signaux émis sont produits par radio-activité.

8. Dispositif pour mesurer la vitesse d'avancement d'un équipement descendu dans un puits, caractérisé en ce qu'il comporte :
- des moyens d'émission (5) associés audit équipement adapté à émettre des signaux en direction de la paroi du puits;
- au moins deux unités de réception (8, 10) associées audit équipement pour recevoir les sigaux renvoyés par la paroi du puits, ces deux unités étant disposées en opération à des profondeurs différentes du puits et à une distance bien déterminée l'une de l'autre;
- des moyens pour mémoriser les signaux respectivement reçus par les deux unités de réception (8, 10);
- des moyens de traitement (12, 25) permettant par une comparaison des signaux mémorisés, d'identifier des portions de paroi du puits ayant successivement renvoyé des signaux vers les deux unités de réception; et
- des moyens de détermination de la vitesse (26) pour mesurer l'intervalle de temps entre les instants de passage des deux unités de réception devant chaque portion de paroi identifiée par ladite comparaison, et en déduire la vitesse de déplacement de l'équipement de puits.

9. Dispositif selon la revendication précédente, caractérisé en ce que les moyens d'émission (5) comporte une seule unité d'émission.

10. Dispositif selon la revendication 8, caractérisé en ce que les moyens d'émission (5) comportent au moins deux unités d'émission associées respectivement auxdites unités de réception.

11. Dispositif selon la revendication précédente, caractérisé en ce qu'il comporte des transducteurs émetteurs-récepteurs.

12. Dispositif selon l'une des revendications 8 à 10, caractérisé en ce que les moyens d'émission comportent une pluralité d'émetteurs (6) répartis à la périphérie dudit équipement.

13. Dispositif selon l'une des revendications 8 à 12, caractérisé en ce que chaque unité de réception comporte une pluralité de récepteurs (11) répartis à la périphérie dudit équipement.

14. Dispositif selon l'une des revendications 8 à 13, caractérisé en ce que les moyens d'émission comportent au moins un transducteur tournant irradiant la paroi du puits par balayage.

15. Dispositif selon l'une des revendications 8 à 14, caractérisé en ce que lesdites unités de réception comportent chacune au moins un transducteur recevant par balayage les signaux reçus par la paroi du puits.

16. Dispositif selon l'une des revendications 8 à 15, caractérisé en ce que chaque unité de réception (8, 10) comporte une chaine d'acquisition (13, 14, 18, 21) pour numériser les signaux reçus et les moyens de traitement comportant des moyens (72) pour capter les variations d'azimut et des moyens de corrélation (25) des signaux mémorisés.

17. Dispositif selon l'une des revendications 8 à 16, caractérisé en ce qu'une partie de l'ensemble constitué par les moyens de mémorisation des moyens de traitement et des moyens de détermination de la vitesse sont disposés en surface.

18. Dispositif selon l'une des revendications précédentes, caractérisé en ce qu'il comporte des moyens de transmission (27) pour relier l'équipement à la surface.

## Patentansprüche

1. Verfahren zum Messen der Vorschubgeschwindigkeit einer in ein Bohrloch (3) hinabgelassenen Ausrüstung (2), dadurch gekennzeichnet, daß es umfaßt:
- Aussenden von Signalen vermittels dieser Ausrüstung (2) zugeordneten Sendemitteln (5);
- Empfangen der durch die Wandung des Bohrlochs durch wenigtens zwei dieser Ausrüstung zugeordnete Empfängereinheiten (8, 10), die sich im Betrieb an unterschiedlichen Orten längs des Bohrlochs und unter einer genau bestimmten Entfernung (D) voneinander befinden;
- Speichern der jeweils durch die beiden Empfängereinheiten empfangenen Signale;
- Erkennen der gleichen Teile der Bohrlochwandung, welche Signale nacheinander gegen die Empfängereinheiten zurückgesandt haben, durch einen Vergleich der gespeicherten Signale, die jeweils durch die beiden Empfängereinheiten empfangen wurden;
- Messen des Zeitintervalls, das die Durchgangsaugenblicke der beiden Empfängereinheiten vor jedem durch diesen Vergleich erkannten Wandungsteil trennt und
- Bestimmen der Vorschubsgeschwindigkeit als Funktion dieses Zeitintervalls.

2. Verfahren nach Anspruch 1, dadurch gekennzeichnet, daß man wenigstens zwei Signalgruppen speichert, die jeweils durch diese Empfängereinheiten empfangen wurden, die je ein Bild wenigstens eines Teil der Umfangsfläche des Bohrlochs darstellen, wobei das Erkennen ein und des gleichen Oberflächenteils, welches Signale nacheinander gegen die beiden Empfängereinheiten zurückgeschickt hat, erhalten wird durch eine Korrelation der beiden entsprechenden Bilder.

3. Verfahren nach Anspruch 2, dadurch gekennzeichnet, daß die Signale jeder Signalanordnung gleichzeitig entsprechend mehreren radialen unterschiedlichen Richtungen empfangen werden.

4. Verfahren nach Anspruch 2, dadurch gekennzeichnet, daß die Signale jeder Anordnung nacheinander durch Abtasten entsprechend mehreren unterschiedlichen radialen Richtungen empfangen werden.

5. Verfahren nach einem der vorhergehenden Ansprüche, dadurch gekennzeichnet, daß die ausgesandten und empfangenen Signale akustische Wellen sind.

6. Verfahren nach einem der Ansprüche 1 bis 4, dadurch gekennzeichnet, daß die ausgesandten und empfangenen Signale elektromagnetische Wellen sind.

7. Verfahren nach einem der Ansprüche 1 bis 4, dadurch gekennzeichnet, daß die ausgesandten Signale durch Radioaktivität erzeugt werden.

8. Vorrichtung zum Messen der Vorschubgeschwindigkeit einer in ein Bohrloch hinabgelassenen Ausrüstung, dadurch gekennzeichnet, daß sie umfaßt:
- Sendemittel (5), die dieser Ausrüstung zugeordnet sind, einer Ausbildung derart, daß Signale in Richtung der Bohrlochwandung ausgesandt werden;
- wenigstens zwei dieser Ausrüstung zugeordnete Empfängereinheiten (8, 10) zum Empfang der durch die Wandung des Bohrlochs zurückgesandten Signale, wobei diese beiden Einheiten im Betrieb auf unterschiedlichen Tiefen des Bohrlochs und unter einer genau bestimmten Entfernung voneinander angeordnet sind;
- Mittel zum Speichern der jeweils durch die beiden Empfängereinheiten (8, 10) empfangenen Signale,
- Verarbeitungsmittel (12, 25), die durch einen Vergleich der gespeicherten Signale es ermöglichen, Teile der Bohrlochwandung zu identifizieren, die nacheinander Signale gegen die beiden Empfängereinheiten zurückgeschickt haben, und
- Mittel zur Bestimmung der Geschwindigkeit (26) zum Messen des Zeitintervalls zwischen den Durchgangsaugenblicken der beiden Empfängereinheiten vor jedem durch diesen Vergleich identifizierten Wandungsteil und hieraus die Vorschubgeschwindigkeit der Bohrlochsausrüstung herzuleiten.

9. Vorrichtung nach dem vorhergehenden Anspruch, dadurch gekennzeichnet, daß die Sendemittel Mittel (5) einer einzigen Sendeeinheit umfassen.

10. Vorrichtung nach Anspruch 8, dadurch gekennzeichnet, daß die Sendemittel (5) wenigstens zwei jeweils diesen Empfängeranordnungen zugeordnete Sendeeinheiten umfassen.

11. Vorrichtung nach dem vorhergehenden Anspruch, dadurch gekennzeichnet, daß sie Sende-Empfängerwandler umfaßt.

12. Vorrichtung nach einem der Ansprüche 8 bis 10, dadurch gekennzeichnet, daß die Sendemittel eine Vielzahl von Sendern (6) umfassen, die auf dem Umfang dieser Ausrüstung verteilt sind.

13. Vorrichtung nach einem der Ansprüche 8 bis 12, dadurch gekennzeichnet, daß jede Empfängereinheit eine Vielzahl von Empfängern (11) umfaßt, die über den Umfang dieser Ausrüstung verteilt sind.

14. Vorrichtung nach einem der Ansprüche 8 bis 13, dadurch gekennzeichnet, daß die Sendemittel wenigstens einen Drehwandler umfassen, der die Wandung des Bohrlochs durch Abtasten anstrahlt.

15. Vorrichtung nach einem der Ansprüche 8 bis 14, dadurch gekennzeichnet, daß diese Empfängereinheiten je wenigstens einen Wandler umfassen, der durch Abtasten die Signale empfängt, die von der Wandung des Bohrlochs empfangen wurden.

16. Vorrichtung nach einem der Ansprüche 8 bis 15, dadurch gekennzeichnet, daß jede Empfangseinheit (8, 10) eine Erfassungskette (13, 14, 18, 21) umfaßt, um die empfangenen Signale zu digitalisieren und die Verarbeitungsmittel Mittel (72) umfassen, um die Azimutveränderungen einzufangen sowie Mittel (25) zur Korrelation der gespeicherten Signale.

17. Vorrichtung nach einem der Ansprüche 8 bis 16, dadurch gekennzeichnet, daß ein Teil der durch die Speichermittel, die Verarbeitungsmittel und die Mittel zum Bestimmen der Geschwindigkeit gebildeten Anordnung an der Oberfläche angeordnet sind.

18. Vorrichtung nach einem der vorhergehenden Ansprüche, dadurch gekennzeichnet, daß sie Übertragungsmittel (27) umfaßt, um die Ausrüstung mit der Oberfläche zu verbinden.

## Claims

1. Method for measuring the speed of movement of a piece of equipment (2) lowered inside a well (3), characterised in that it consists in:
- transmitting signals by transmission means (5) connected to the said equipment (2);
- receiving the signals sent back by the wall of the well in at least two receiving units (8, 10) connected to the said equipment and located during operation at different points along the well and at a specific distance D from each other;
- storing in memory the signals received respectively by the two receiving units;
- recognising same portions of well wall that have been sent back by the signals to the two receiving units in succession by comparing the signals received respectively by the two receiving units and stored in memory;
- measuring the time interval separating the instants at which the two receiving units passed in front of each wall portion recognised by the said comparison; and
- determining the speed of movement as a function of the said time interval.

2. Method as claimed in claim 1, characterised in that at least two sets of signals received respectively by the said receiving units are stored in memory, each representing an image of at least one portion of the peripheral surface of the well, where a same surface portion that has been successively sent back by the signals to the two receiving units is recognised by correlating two corresponding images.

3. Method as claimed in claim 2, characterised in that the signals of each set of signals are received simultaneously along several different radial directions.

4. Method as claimed in claim 2, characterised in that the signals of each set are received in succession by scanning along different radial directions.

5. Method as claimed in one of the previous claims, characterised in that the signals transmitted and received are acoustic waves.

6. Method as claimed in one of claims 1 to 4, characterised in that the signals transmitted and received are electromagnetic waves.

7. Method as claimed in one of claims 1 to 4, characterised in that the signals transmitted are produced by radio-activity.

8. Device for measuring the speed of penetration of a piece of equipment lowered into a well, characterised in that it comprises:
- transmission means (5) connected to the said equipment designed to transmit signals in the direction of the well wall;
- at least two receiving units (8, 10) connected to the said equipment to receive the signals sent back by the well wall, these two units being located during operation at different depths of the well and at a specific distance from one another;
- means for storing in memory the signals received respectively by the two receiving units (8, 100.
- processing means (12, 25) enabling portions of well wall that have successively sent back signals to the two receiving units to be identified by comparing the signals stored in memory; and
- speed calculating means (26) for measuring the time interval between the instants at which the two receiving units passed in front of each wall portion identified by the comparison and deriving therefrom the speed at which the equipment is moving in the well.

9. Device as claimed in the previous claim, characterised in that the transmission means (5) have a single transmission unit.

10. Device as claimed in claim 8, characterised in that the transmission means (5) have at least two transmission units connected respectively to the said receiving units.

11. Device as claimed in the previous claim, characterised in that it has transmitting-receiving transducers.

12. Device as claimed in one of claims 8 to 10, characterised in that the transmission means have a plurality of transmitters (6) distributed along the periphery of the said equipment.

13. Device as claimed in one of claims 8 to 12, characterised in that each receiving unit has a plurality of receivers (11) distributed along the periphery of the said equipment.

14. Device as claimed in one of claims 8 to 13, characterised in that the transmission means have at least one rotating transducer irradiating the wall of the well by scanning.

15. Device as claimed in one of claims 8 to 14, characterised in that the said receiving units each have at least one transducer receiving by scanning the signals received by the wall of the well.

16. Device as claimed in one of claims 8 to 15, characterised in that each receiving unit (8, 10) has an acquisition chain (13, 14, 18, 21) to digitise the signals received and the processing means have means (72) to sense variations in azimuth and means for correlating (25) the signals stored in memory.

17. Device as claimed in one of claims 8 to 16, characterised in that a part of the unit made up of the memory means, the processing means and the speed calculating means is located at the surface.

18. Device as claimed in one of the previous claims, characterised in that it has transmission means (27) to link the equipment to the surface.
